# EUROPÄISCHE PATENTSCHRIFT

(11) **EP 3 628 165 B1**
(45) Veröffentlichungstag und Bekanntmachung des Hinweises auf die Patenterteilung: **31.03.2021**
(21) Anmeldenummer: 18197344.7
(22) Anmeldetag: 27.09.2018
(51) Int. Cl.: A22B 7/00, A22C 17/00, A22C 21/00, A22C 25/08, A22C 29/02

(54) **VORRICHTUNG UND VERFAHREN ZUM ÜBERFÜHREN VON ARTIKELN DER FISCH- UND FLEISCHVERARBEITENDEN INDUSTRIE IN EINE VORGEGEBENE ENDLAGE**
METHOD AND DEVICE FOR TRANSFERRING ARTICLES IN THE SUBSTANCES ORIGINATING IN FISH AND MEAT PROCESSING INDUSTRY INTO A PREDETERMINED END POSITION
DISPOSITIF ET PROCÉDÉ DE TRANSFERT D'ARTICLES DE L'INDUSTRIE DE TRAITEMENT DU POISSON ET DE LA VIANDE DANS UNE AIRE DE PRODUCTION FINALE PRÉDÉFINI

(43) Veröffentlichungstag der Anmeldung: 01.04.2020
(73) Patentinhaber: Nordischer Maschinenbau Rud. Baader GmbH + Co. KG, 23560 Lübeck (DE)
(72) Erfinder: JACOBSEN, Ulf, 23611 Bad Schwartau (DE); DALGAARD-NIELSEN, Ib Verner, 8362 Hoerning (DK)
(74) Vertreter: Stork Bamberger Patentanwälte PartmbB

(56) Entgegenhaltungen:
- EP-A1- 0 742 165
- EP-A2- 2 479 111
- EP-B1- 1 984 122
- DE-A1-102013 017 314

## Beschreibung

Die vorliegende Erfindung betrifft eine zum Überführen von Artikeln der fisch- und fleischverarbeitenden Industrie in eine vorgegebene Endlage eingerichtete Vorrichtung. Des Weiteren betrifft die Erfindung ein Verfahren zum Überführen von Artikeln der fisch- und fleischverarbeitenden Industrie in eine vorgegebene Endlage.

Derartige Vorrichtungen und Verfahren kommen bei der maschinellen Verarbeitung von Artikeln und Zwischen- und Endprodukten der fisch- und fleischverarbeitenden Industrie zum Einsatz. Zur Durchführung weiterer Bearbeitungsschritte oder zum lagegerechten Ablegen der Produkte in Transportbehältern oder Endverpackungen ist es erforderlich, die Artikel in eine vorgegebene Endlage zu überführen. Beispielsweise ist es gewünscht, beim Überführen von Fischfilets in Endverpackungen die Fischfilets wahlweise mit der Hautseite nach unten oder oben abzulegen.

Aus dem Dokument EP 1 984 122 B1 gehen eine Vorrichtung und ein Verfahren zum Klassifizieren von frischen Lebensmitteln auf Grundlage des Gewichts hervor. Die zu verteilenden Fischartikel werden gewogen und auf Basis ihres Gewichts in verschiedene Behälter überführt. Zum gesteuerten Überführen der Fischartikel in die Behälter werden die auf einer Gitterstruktur liegenden Fischartikel mittels einer Schiebereinrichtung von der Gitterstruktur heruntergeschoben und fallen dann unter Schwerkrafteinwirkung in den jeweiligen Behälter.

Nachteilig ist, dass die Artikelausrichtung und damit deren Endlage nur eingeschränkt steuerbar ist. Zwar kann durch den Zeitpunkt der Ansteuerung der Schiebeeinrichtung zum Abwurf der Artikel der jeweilige Ziel-Behälter ausgewählt werden, jedoch besteht keine Möglichkeit, die Ausrichtung der Artikel zu beeinflussen, insbesondere ein Wenden der Artikel beim Überführen ist nicht möglich. Die Ausrichtung der Artikel kann also nicht so geändert werden, dass wahlweise die Haut- oder hautfreie Seite des Filets oben liegt.

Ein weiterer Nachteil besteht darin, dass viele bewegliche Teile erforderlich sind, die unmittelbar mit den Lebensmittelartikeln in Kontakt kommen. Diese sind zur Einhaltung der geforderten Hygienestandards mit entsprechendem Aufwand zu reinigen und keimfrei zu macher

Aus dem Dokument EP 0 742 165 A1 ist eine Vorrichtung eingerichtet zum Überführen von Artikeln in eine vorgegebene Endlage offenbart.

Es ist daher Aufgabe der vorliegenden Erfindung, eine Vorrichtung vorzuschlagen, mittels derer die genannten Artikel in eine vorgegebene Endposition überführt werden, wobei die Endposition sowohl hinsichtlich der Übergabestelle als auch der Orientierung der Artikel variabel steuerbar ist. Mit anderen Worten besteht die Aufgabe einerseits darin, eine Vorrichtung zu schaffen, die ein exaktes Überführen der Artikel an jeweils vorgegebenen Positionen gewährleistet. Anderseits besteht die Aufgabe darin, bei der Übergabe die Orientierung bzw. Ausrichtung der Artikel steuervariabel vorgeben zu können. Zudem ist es Aufgabe der vorliegenden Erfindung eine Vorrichtung bereitzustellen, deren Komponenten möglichst einfach zu reinigen sind. Des Weiteren besteht die Aufgabe darin, ein entsprechendes Verfahren vorzuschlagen.

Die Aufgabe wird durch die eingangs genannte Vorrichtung gelöst, wobei diese eine umlaufende, zum Fördern der Artikel in einer Förderebene ausgebildete Endlosfördereinrichtung mit einer Mehrzahl zur Einzelaufnahme der Artikel eingerichteter und in Förderrichtung bewegbar ausgebildeter Transportabschnitte umfasst, wobei jeder der Transportabschnitte in Förderstellung ein zwei Artikelauflageflächen bildendes Transportelementepaar aufweist und jedes Transportelement des Transportelementepaares jeweils um im Randbereich des jeweiligen Transportabschnitts verlaufende Achsen derart steuerbeweglich schwenkbar eingerichtet ist, dass die Artikel in mindestens einem Überführungsbereich unter Schwerkrafteinwirkung in eine unterhalb der Förderebene gelegene Ebene durch wahlweises gesteuertes Verschwenken beider Transportelemente jeweils eines der Transportelementepaare mittels einer Steuereinrichtung unter Beibehaltung der Artikelausrichtung in die vorgegebene Endlage überführt werden, oder durch gesteuertes Verschwenken jeweils eines der Transportelemente jeweils eines der Transportelementepaare unter Änderung der Artikelausrichtung in die vorgegebene Endlage überführt werden.

Die erfindungsgemäße Vorrichtung bietet den Vorteil, dass die Artikel in einem oder mehreren Überführungsbereich(en) in vorgegebene Endlagen exakt übergeben werden können. So wird einerseits mittels der Steuereinrichtung anhand einer vorgegebenen Ablageposition unter Berücksichtigung der Fördergeschwindigkeit ein Übergabezeitpunkt ermittelt, zu dem eines oder beide der Transportelemente eines Transportelementepaares aus der Förderstellung heraus verschwenkt werden, um den jeweiligen Artikel exakt an der vorgegebenen Ablageposition in die vorgegebene Endlage zu überführen. Andererseits umfasst die vorgegebene Endlage ein weiteres Positionierungskriterium, nämlich, ob der Artikel in der Ausrichtung bzw. Orientierung verbleiben soll, in der dieser bereits in der Förderstellung mittels der Fördereinrichtung gefördert wird, oder, ob der Artikel bezüglich seiner Lage von Unter- und Oberseite beim Überführen in die Endlage gewendet werden soll.

Die erfindungsgemäße Vorrichtung ist insbesondere geeignet, Fischfilets mit einer Hautseite und einer hautfreien Seite in Behälter zu überführen. Mit der erfindungsgemäßen Vorrichtung ist es möglich, die Endlage der Fischfilets sowohl hinsichtlich ihrer Position in Förderrichtung als auch hinsichtlich ihrer Lage von Hautseite und hautfreier Seite weitestgehend frei vorzugeben. Vorzugsweise werden die Filets mittels der Endlosfördereinrichtung quer zu ihrer Längsseite, also derjenigen Seite, die parallel zur Fischrumpflängsachse verläuft, gefördert.

Eine weitere zweckmäßig Ausgestaltung der Erfindung ist dadurch gekennzeichnet, dass die Transportelemente der Transportelementepaare jeweils in der Förderstellung zur Mitte des jeweiligen Transportabschnitts derart geneigt sind, dass die Artikelauflageflächen jeweils eine Aufnahmemulde für einen der Artikel bilden. Die Transportelementepaare sind auf diese Weise als Zentriereinheit ausgebildet, die eingerichtet ist, die Artikel in der Förderstellung in jedem der Transportabschnitte bezüglich beider Transportelemente mittig zu positionieren. Die Artikel nehmen damit in der Förderstellung immer eine definierte Ausrichtung ein, so dass ein Höchstmaß an Positioniergenauigkeit und Verlässlichkeit beim Beibehalten oder Ändern der Artikelausrichtung erzielt wird. Die jeweiligen Neigungswinkel der Transportelemente eines Transportelementepaares gegenüber der Förderebene sind vorzugsweise gleich groß. Alternativ sind die Neigungswinkel unterschiedlich, beispielsweise um Artikel mit unsymmetrischer Artikelgeometrie ebenfalls optimal zentriert ausrichten zu können. Der jeweilige Neigungswinkel der Transportelemente ist zudem ein Einstellparameter für die Änderung der Artikelausrichtung beim Überführen der Artikel in die vorgegebene Endlage.

Insbesondere durch Wahl des oder der Neigungswinkel wird die Größe des beim Überführen der Artikel unter Änderung der Artikelausrichtung auf den Artikel wirkenden Drehmoments vorgegebenen. Bei einer größeren Neigung gegenüber der Förderebene stellt das jeweilige Transportelement eine stärker geneigte schiefe Ebene dar, so dass der Artikel eine entsprechend höhere Beschleunigung erfährt, die während der Fallphase die Stärke der Eigenrotation des Artikels bis zum Erreichen der Endlage zentral bestimmt. Vorzugsweise bestimmt der Neigungswinkel desjenigen Transportelements die Größe der Rotation des Artikels beim Überführen, das nicht verschwenkt wird.

Gemäß einer weiteren bevorzugten Ausführungsform umfasst die Fördereinrichtung zwei zueinander parallel angeordnete, sich in der Förderrichtung erstreckende umlaufende Antriebsbänder, zwischen denen die Transportelemente um die in dem Randbereich des jeweiligen Transportabschnitts verlaufenden Achsen schwenkbar angeordnet sind. Die Antriebsbänder sind vorzugsweise als Antriebsriemen, beispielsweise aus Polyurethan oder einem hinsichtlich der Flexibilität vergleichbaren Material hergestellt. Die Antriebsbänder erfüllen so eine Doppelfunktion: Einerseits dienen die umlaufend angetriebenen Antriebsbänder dem Transport der Transportelemente in die Förderrichtung, anderseits sind die Antriebsbänder als Schwenklager für die genannten Achsen der Transportelemente eingerichtet. Die Schwenklager werden beispielsweise durch auf den Antriebsbändern in regelmäßigem Abstand angeformte vorspringende Lagerformteile gebildet, in denen die Achsen der Transportelemente schwenkbar gelagert sind. Die Lagerformteile können beispielsweise angeschweißt sein. Weiter bevorzugt sind die Lagerformteile mit entsprechenden Gleitlagern versehen.

Weiter bevorzugt sind die Antriebsbänder - mit Ausnahme der genannten Lagerformteile - flächig und eben ausgebildet. Dies wirkt sich insbesondere positiv auf die im Bereich der Lebensmittelverarbeitung regelmäßig erhöhten Hygieneanforderungen aus. Die glatten Oberflächen der Antriebsbänder bietet Verschmutzungen wenig Halt, so dass sowohl Anhaftungen von Verschmutzen reduziert werden, als auch der Reinigungsaufwand deutlich gemindert ist. Insbesondere bei der Verwendung von Antriebsbändern mit einer Armierung, beispielsweise aus Stahl, Edelstahl, Kevlar oder vergleichbaren Materialien, ist diese Armierung in einer Kunststoffschicht eingebettet. Auch hier wirkt sich die flächige ebene Ausbildung der Antriebsbänder insgesamt positiv aus. Die Verwendung dieser Antriebsbänder ist dem Einsatz von Zahnriemen deutlich überlegen, da diese in den Zahnriementälern kleine Kerben zum Beispiel zur Fixierung der Armierung aufweisen, und der Kunststoffmantel dort aufgrund der bei Zahnriemen geometriebedingt auftretenden mechanischen Belastungen häufig zu Kerben- und Rissbildungen in der Kunststoffoberfläche neigt, die die Ansammlung von Verschmutzungen und Keimen begünstigen.

Gemäß einer weiteren bevorzugten Ausbildung der Erfindung umfasst die Endlosfördereinrichtung jeweils zwei sich in der Förderrichtung erstreckende, parallel unterhalb der Antriebsbänder angeordnete Führungselemente, die zur Gleitführung von an den Transportelementen angeordneten Umlenkelementen eingerichtet sind. Anders ausgedrückt bilden die Führungselemente eine Unterführung, die unterhalb der Führungsebene und der Antriebsbänder angeordnet und parallel zur Förderebene ausgerichtet ist. Der Abstand zwischen Förderebene und Oberseite der Führungselemente beeinflusst die Größe der Neigungswinkel der Transportelemente.

Gemäß einer weiteren bevorzugten Ausbildung der Erfindung sind die Umlenkelemente jeweils an den Transportelementen eines der Transportelementepaare an gegenüberliegenden Führungsseiten der Transportelemente angeordnet. Jedes der Transportelemente ist auf diese Weise einer Führungsseite zugewiesen. Beispielsweise werden die jeweils in der Förderrichtung vorauseilenden Transportelemente von den rechtsseitig angeordneten Führungselementen geführt, während die jeweils nacheilenden Transportelemente linksseitig geführt werden. Diese Zuordnung kann alternativ umgekehrt eingerichtet sein. Vorteilhafterweise werden so jeweils alle vorauseilenden Transportelemente mittels einer der Förderseiten geführt, während die jeweils nacheilenden der Transportelemente mittels der jeweils anderen der Förderseiten geführt werden.

Eine weitere zweckmäßige Ausbildung der Erfindung ist dadurch gekennzeichnet, dass die Führungselemente jeweils eine ortsfest angeordnete Führungsschiene sowie in dem mindestens einen Überführungsbereich mindestens ein mittels der Steuereinrichtung steuerbeweglich ausgebildetes Verstellelement umfassen, das eingerichtet ist, die Umlenkelemente in einer Führungsstellung gleitend zu führen und in einer Umlenkstellung die Führung der Umlenkelemente freizugeben. Die Steuereinrichtung ist also ausgebildet, die Umlenkelemente in Förderstellung jeweils in der Führungsstellung zu belassen. Ist ein Artikel zu überführen, veranlasst die Steuereinrichtung das jeweilige Umlenkelement in eine Umlenkstellung zu gelangen, in der keine Führung des jeweiligen Umlenkelementes mehr erfolgt, so dass das zugehörige Transportelement der Schwerkraftwirkung folgend auf das Transportelement sowie ggf. durch die einwirkende Gewichtskraft des Artikels selbsttätig nach unten verschwenkt.

Gemäß einer weiteren bevorzugten Ausführungsform weisen die Verstellelemente mindestens eine Führungsfläche auf, die um eine in der Förderrichtung verlaufenden Drehachse mittels der Steuereinrichtung steuerbar schwenkbar eingerichtet ist. Vorzugsweise erstecken sich die Führungsflächen in der Förderrichtung und schließen - zumindest in der Förderstellung bzw. der Führungsstellung der Verstellelemente - unmittelbar an die ortsfest angeordnete Führungsschiene an. Durch Schwenken der Führungsfläche um die genannte Drehachse mittels der Steuereinrichtung wird die Führungsfläche gegenüber der Führungsschiene verdreht, vorzugsweise um einen Winkel von 90°, so dass das jeweilige Umlenkelement von dieser nicht weitergeführt wird. Auf diese Weise wird eine konstruktiv einfache, kompakte und zuverlässige Ausführung des Verstellelements bereitgestellt.

Gemäß einer weiteren bevorzugten Ausführungsform sind die Verstellelemente im die Drehachse enthaltenden Querschnitt kreuzartig ausgebildet. Das Verstellelement ist vorzugsweise als Längsprofilelement ausgebildet, das jeweils vier der Führungsflächen umfasst, die jeweils um 90° versetzt, im Querschnitt kreuzartig, angeordnet sind. In den Winkelstellungen 0°, 90°, 180° und 270° ist die Führungsfläche des Verstellelements auf diese Weise fluchtend mit der ortsfesten Führungsschiene ausgerichtet und bildet so eine durchgängige Gleitführungsfläche. In den Winkelstellungen 45°, 135°, 225° und 315° gelangt das Umlenkelement nicht mehr in Eingriff mit einer der Führungsflächen und die Führung der Umlenkelemente wird - wir zuvor beschrieben - freigegeben.

Weiter bevorzugt sind die Transportelemente gitterartig ausgebildet. Dies bietet den Vorteil eines geringen Eigengewichts der Transportelemente. Zudem sind die Transportelemente einfach und kostengünstig herzustellen und leicht zu reinigen. Alternativ sind die Transportelemente vollflächig ausgebildet und beispielsweise aus Kunststoff oder Blech gefertigt.

Eine weitere zweckmäßige Ausbildung der Erfindung ist dadurch gekennzeichnet, dass die in den Randbereichen des jeweiligen Transportabschnitts verlaufenden Achsen jeweils eines der Transportelemente eines der Transportelementepaare stabförmig ausgebildet und beidseitig an den Antriebsbändern mittels Schwenklagerung angeordnet sind. Die Achsen bilden damit einen integrativen Bestandteil der gitterartig ausgebildeten Transportelemente. Die jeweiligen Achsen sind bereits selbst Bestandteil der Gitterstruktur der Transportelemente. Es sind keine separaten Anbauteile erforderlich, so dass die Transportelemente einfach und kostengünstig in der Herstellung sowie leicht zu reinigen sind, so dass die in der Lebensmittelindustrie erhöhten Hygienestandards stets eingehalten werden. Weiter bevorzugt sind - in gleicher Weise - auch die Umlenkelemente stabförmig ausgebildet.

Eine weitere zweckmäßige Ausbildung der Erfindung ist dadurch gekennzeichnet, dass die Steuereinrichtung zum Steuern der Verstellelemente jeweils mit einer Antriebseinheit wirkverbunden ist, wobei die Antriebseinheit einen steuerbaren Aktor zur Erzeugung einer Transversalbewegung und eine zur Umwandlung der Transversalbewegung in eine Rotationsbewegung eingerichtete Umwandlungseinheit umfasst, die zum Schwenken der mindestens einen Führungsfläche des Verstellelements um die Drehachse ausgebildet ist. Dies bietet den Vorteil, dass zur Steuerung des Verstellelements kostengünstige Aktoren verwendet werden können, an die keine besonderen Anforderung hinsichtlich ihrer Positioniergenauigkeit gestellt werden. Der Aktor wird auf diese Weise von der Steuerung des Umlenkelements insoweit entkoppelt, dass sich etwaige Ungenauigkeiten der mittels des Aktors erzeugten Transversalbewegung nicht unmittelbar auf die Stellgenauigkeit der Verstellelemente auswirken.

Gemäß einer vorteilhaften Weiterbildung der Erfindung umfasst die Umwandlungseinheit zwei Kurvensteuerteile, wobei ein erstes Kurvensteuerteil an dem Aktor angeordnet ist und ein zweites Kurvensteuerteil an dem Verstellelement angeordnet ist, wobei die Kurvensteuerteile einander zugewandte korrespondierend ausgebildete Steuerkurvenpaare aufweisen. Hiermit wird auf besonders einfache konstruktive Weise die vom Aktor erzeugte Transversalbewegung in eine Rotationsbewegung zur Steuerung der Verstellelementposition umgesetzt.

Ein vorteilhafte Ausgestaltung der Erfindung ist dadurch gekennzeichnet, dass ein erstes der Steuerkurvenpaare eingerichtet ist, die Transversalbewegung des Aktors in eine Rotationsbewegung des zweiten Kurvensteuerteils relativ zu dem ersten Kurvensteuerteil zu wandeln und ein zweites der Steuerkurvenpaare eingerichtet ist, die Transversalbewegung des Aktors auf das zweite Kurvensteuerteil in der Wirkrichtung des Aktors zu übertragen. Mit anderen Worten ist die Umwandlungseinheit eingerichtet, einerseits die Transversalbewegung des Aktors in der Wirkrichtung auf das Verstellelement zu übertragen, als auch andererseits das Verstellelement entsprechend zu verschwenken. Die Umwandlungseinheit ist also eingerichtet, aus der Transversalbewegung des Aktors eine aus einer Transversalbewegung und einer Rotationsbewegung überlagerte Gesamtbewegung des Verstellelements zu bewirken.

Gemäß einer vorteilhaften Ausbildung der Erfindung ist vorgesehen, dass das Verstellelement entgegen der Wirkrichtung des Aktors mittels einem Federelement und einem Axiallager federvorgespannt axial verschieblich gelagert ist, so dass das Verstellelement in der Führungsstellung bezüglich seiner Axialposition in Ruhestellung ist, während das Verstellelement in der Umlenkstellung bezüglich seiner Axialposition in einer Ausrückstellung ist.

Dies bietet den Vorteil, dass das Verstellelement in axialer Richtung zwischen einer Ruhestellung und einer Ausrückstellung verschiebbar eingerichtet ist. Um eine axiale Verstellbarkeit der Verstellelemente realisieren zu können, ist es erforderlich entsprechende Leerräume in axialer Richtung vorzusehen. Vorzugsweise ist die axiale Ausdehnung dieser Leerräume so bemessen, dass die Umlenkelemente unter Beibehaltung der Führungswirkung unbeeinflusst über diese Leerräume hinübergleiten, so dass eine Verschiebung in axialer Richtung keine Auswirkung auf die Führung der Umlenkelemente hat.

Eine weiter bevorzugte Ausführung der Erfindung zeichnet sich dadurch aus, dass an dem Verstellelement eine erste Steuerkrone angeordnet ist, die in der Ruhestellung unter formschlüssigem Eingriff in eine ortsfest angeordnete zweite Steuerkrone zur Rotationsarretierung der ersten Steuerkrone ausgebildet ist, und wobei die Steuerkronen weiter eingerichtet sind, in der Ausrückstellung einen formschlussfreien Zustand einzunehmen. Die Steuerkronen bilden eine Art Zwangsarretierung, mittels derer die Verstellelemente bezüglich ihrer Rotationsposition exakt und mit hoher Präzision selbsttätig ausgerichtet werden. Die Positioniergenauigkeit ist also durch die Geometrie der Steuerkronen festgelegt und daher nicht abhängig von der Positioniergenauigkeit des Aktors. Auf diese Weise können kostengünstige Aktoren zum Einsatz kommen.

Des Weiteren wird die Aufgabe durch ein entsprechendes Verfahren zum Überführen von Artikeln der fisch- und fleischverarbeitenden Industrie in eine vorgegebene Endlage mit den eingangs genannten Merkmalen gelöst, umfassend die Schritte: Fördern der Artikel in einer Förderebene mittels einer umlaufenden Endlosfördereinrichtung mit einer Mehrzahl zur Einzelaufnahme der Artikel eingerichteter Transportabschnitte in eine Förderrichtung, wobei jeder der Transportabschnitte in Förderstellung ein zwei Artikelauflageflächen bildendes Transportelementepaar umfasst und jedes Transportelement des Transportelementepaares jeweils um im Randbereich des jeweiligen Transportabschnitts verlaufende Achsen steuerbeweglich schwenkbar eingerichtet ist; wahlweise gesteuertes Überführen der Artikel unter Schwerkrafteinwirkung in mindestens einem Überführungsbereich in eine unterhalb der Förderebene gelegene Ebene durch wahlweises gesteuertes Verschwenken beider Transportelemente jeweils eines der Transportelementepaare mittels einer Steuereinrichtung unter Beibehaltung der Artikelausrichtung in die vorgegebene Endlage; oder durch gesteuertes Überführen der Artikel durch wahlweise gesteuertes Verschwenken jeweils eines der Transportelemente jeweils eines der Transportelementepaare unter Änderung der Artikelausrichtung in die vorgegebene Endlage.

Die mit dem erfindungsgemäßen Verfahren verbundenen Vorteile sind bereits im Zusammenhang mit der erfindungsgemäßen Vorrichtung zuvor ausführlich beschrieben, auf die daher an dieser Stelle verwiesen wird.

Eine bevorzugte Weiterbildung der Erfindung zeichnet sich durch Zentrieren der Artikel in der Förderstellung durch Schrägstellung der Transportelemente der Transportelementepaare jeweils zur Mitte des jeweiligen Transportabschnitts hin aus, so dass die Artikelauflageflächen jeweils eine Aufnahmemulde für einen der Artikel bilden.

Eine weitere zweckmäßige Ausbildung der Erfindung ist gekennzeichnet durch Antreiben der Transportelemente der Endlosfördereinrichtung mittels zueinander parallel angeordneten, sich in der Förderrichtung erstreckenden, umlaufenden Antriebsbändern, zwischen denen die Transportelemente um die in dem Randbereich des jeweiligen Transportabschnitts verlaufenden Achsen schwenkbar sind.

Eine weitere zweckmäßige Ausgestaltung der Erfindung ist gekennzeichnet durch Gleitführen von an den Transportelementen angeordneten Umlenkelementen mittels jeweils zwei sich in der Förderrichtung erstreckenden, parallel unterhalb der Antriebsbänder angeordneten Führungselementen der Fördereinrichtung.

Gemäß einer weiteren bevorzugten Ausbildung der Erfindung werden die Umlenkelemente jeweils einseitig an gegenüberliegenden Führungsseiten der Transportelemente eines der Transportelementepaare geführt.

Eine bevorzugte Weiterbildung der Erfindung zeichnet sich durch Gleitführen der Umlenkelemente in einer Führungsstellung mittels jeweils einer ortsfest angeordneten Führungsschiene der Führungselemente sowie Freigeben der Umlenkelemente in einer Umlenkstellung in dem Überführungsbereich mittels mindestens eines über die Steuereinrichtung steuerbaren Verstellelements aus.

Gemäß einer weiteren bevorzugten Ausbildung der Erfindung wird mindestens eine Führungsfläche der Verstellelemente um eine in der Förderrichtung verlaufende Drehachse mittels der Steuereinrichtung steuerbar verschwenkt.

Eine weitere zweckmäßige Ausbildung der Erfindung ist gekennzeichnet durch Ansteuern einer Antriebseinheit mittels der Steuereinrichtung zum Erzeugen einer Transversalbewegung mittels eines steuerbaren Aktors und Umwandlung der Transversalbewegung in eine Rotationsbewegung mittels einer hierzu eingerichteten Umwandlungseinheit, um die mindestens eine Führungsfläche des Verstellelements um die Drehachse zu verschwenken.

Eine weitere zweckmäßige Ausgestaltung der Erfindung ist dadurch gekennzeichnet, dass die mindestens eine Rotationsbewegung mittels zwei Kurvensteuerteilen der Umwandlungseinheit erzeugt wird, indem ein erstes Kurvensteuerteil an dem Aktor angeordnet ist und ein zweites Kurvensteuerteil an dem Verstellelement angeordnet ist, wobei die Kurvensteuerteile einander zugewandte korrespondierend ausgebildete Steuerkurvenpaare aufweisen.

Eine weitere bevorzugte Ausbildung der Erfindung zeichnet sich durch Wandeln der Transversalbewegung des Aktors in eine Rotationsbewegung des zweiten Kurvensteuerteils relativ zu dem ersten Kurvensteuerteil mittels eines ersten Steuerkurvenpaares und Übertragen der Transversalbewegung des Aktors auf das zweite Kurvensteuerteil in der Wirkrichtung des Aktors aus.

Gemäß einer weiteren bevorzugten Ausbildung der Erfindung ist das Verstellelement in der Führungsstellung bezüglich seiner Axialposition in Ruhestellung, während das Verstellelement in der Umlenkstellung bezüglich seiner Axialposition in einer Ausrückstellung ist, indem das Verstellelement entgegen der Wirkrichtung des Aktors mittels eines Federelements und einem Axiallager federvorgespannt axial verschieblich gelagert ist.

Eine vorteilhafte Ausbildung der Erfindung zeichnet sich durch formschlüssigen Eingriff in eine ortsfest angeordnete zweite Steuerkrone zur Rotationsarretierung der ersten Steuerkrone in der Ruhestellung und Einnehmen der Steuerkronen eines formschlussfreien Zustandes in der Ausrückstellung.

Die mit dem vorstehend genannten Ausführungsformen des erfindungsgemäßen Verfahren verbundenen Vorteile und Vorzüge sind bereits zuvor im Zusammenhang mit der erfindungsgemäßen Vorrichtung in aller Ausführlichkeit beschrieben, so dass an dieser Stelle zur Vermeidung von Wiederholungen auf die dort genannten Vorzüge verwiesen wird.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung,
- Fig. 2: eine Detaildarstellung eines Teilabschnittes der erfindungsgemäßen Vorrichtung mit zwei Transportabschnitten in Förderstellung,
- Fig. 3: eine in Figur 2 gezeigte Detaildarstellung in zwei Überführungsbereichen,
- Fig. 4: eine Detailansicht eines Transportelementepaares in Förderstellung,
- Fig. 5: eine Detailansicht eines Transportelementepaares beim Überführen eines Artikels unter Änderung der Artikelausrichtung,
- Fig. 6: eine Detailansicht eines Transportelementepaares beim Überführen eines Artikels unter Beibehaltung der Artikelausrichtung
und
- Fig. 7: eine Detailansicht des Verstellelements mit Antriebseinheit.

Die erfindungsgemäße Vorrichtung sowie das erfindungsgemäße Verfahren werden im Folgenden näher erläutert. Die Zeichnung zeigt insbesondere Ausführungsvarianten der erfindungsgemäßen Vorrichtung, anhand derer sich jedoch auch der erfindungsgemäße Verfahrensablauf ergibt.

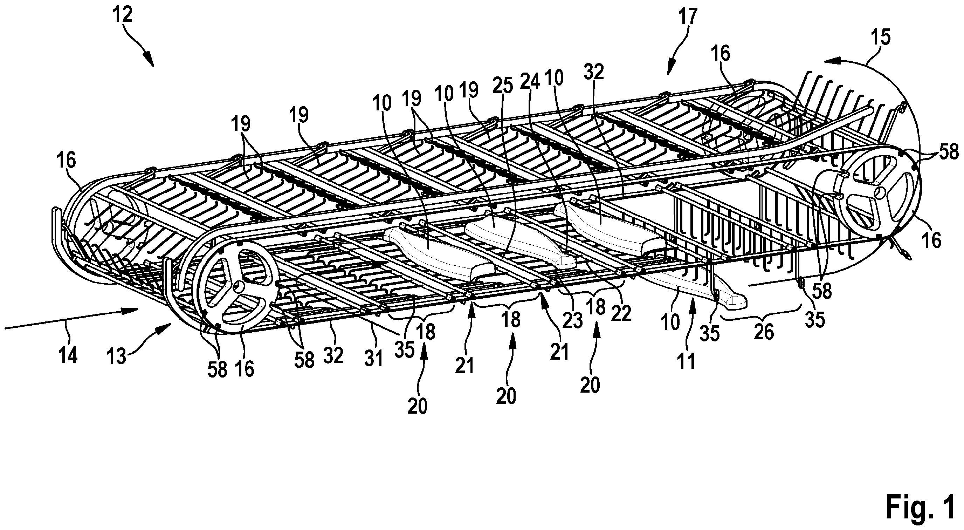

Figur 1 zeigt eine perspektivische Ansicht der erfindungsgemäßen Vorrichtung. Die Vorrichtung ist eingerichtet, Artikel 10 der fisch- und fleischverarbeitenden Industrie in eine vorgegebene Endlage 11 zu überführen. Vorzugsweise ist die erfindungsgemäße Vorrichtung eingerichtet, Fischfilets zu überführen. Die Vorrichtung umfasst - wie in der Figur 1 gezeigt - eine umlaufende Endlosfördereinrichtung 12, die eingerichtet ist, die Artikel 10 in einer Förderebene 13 in Förderrichtung 14 zu fördern.

Wie der Figur 1 zu entnehmen ist, umfasst die Endlosfördereinrichtung 12 vorzugsweise Umlenkräder 16, mittels derer über eine Rückführstrecke 17 in Gegenförderrichtung 15 ein umlaufender Endlosförderbetrieb realisiert ist.

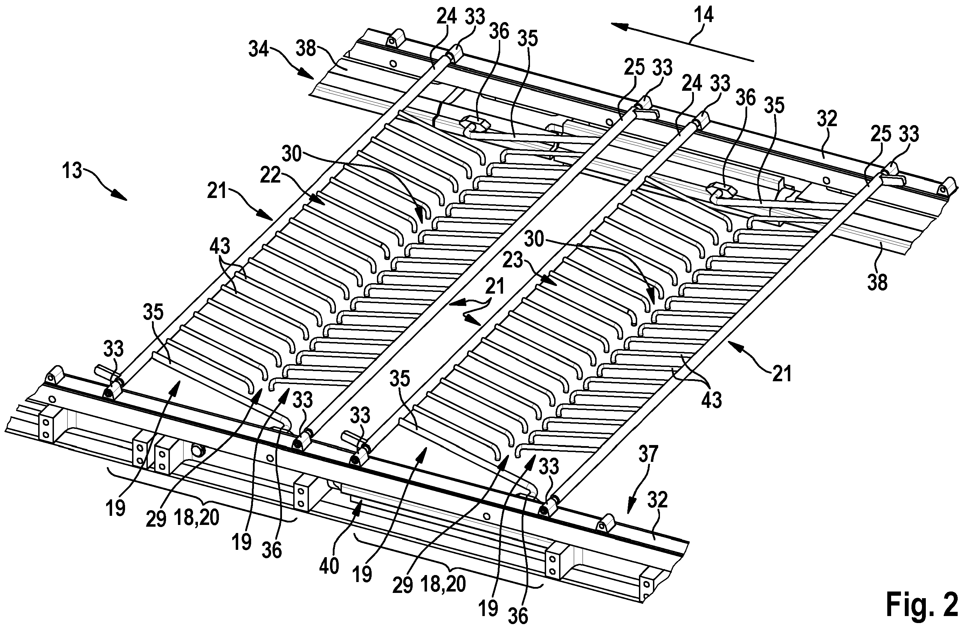

Die Endlosfördereinrichtung 12 umfasst vorzugsweise eine Mehrzahl zur Einzelaufnahme der Artikel 10 eingerichteter Transportabschnitte 18. Die Transportabschnitte 18 sind in Förderrichtung 14 bewegbar eingerichtet. In der in Figur 2 gezeigten Förderstellung bildet jeder der Transportabschnitte 18 ein zwei Auflageflächen 19 für jeweils einen der Artikel 10 bildendes Transportelementepaar 20. Jedes der Transportelementepaare 20 umfasst jeweils zwei Transportelemente 22, 23, die jeweils um im Randbereich 21 des jeweiligen Transportabschnitts 18 verlaufende Achsen 24, 25 steuerbeweglich schwenkbar eingerichtet sind.

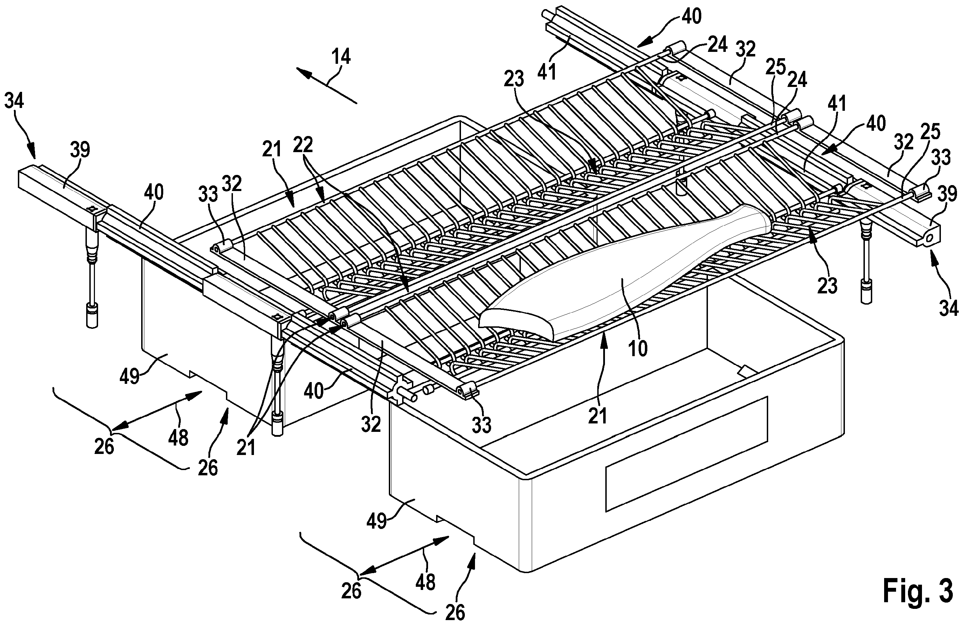

Wie in Figur 3 gezeigt, sind die Transportelemente 22, 23 eines der Transportelementepaare 20 derart steuerbeweglich schwenkbar eingerichtet, dass die Artikel 10 in mindestens einem Überführungsbereich 26 unter Schwerkrafteinwirkung in eine unterhalb der Förderebene 13 gelegene Ebene durch wahlweises gesteuertes Verschwenken eines oder beider Transportelemente 22, 23 eines der Transportabschnitte 18 steuervariabel überführt werden können.

Die Anzahl der Überführungsbereiche 26 ist beliebig erweiterbar. Wie beispielsweise in der Figur 3 gezeigt, können zwei der Überführungsbereiche 26 vorgesehen sein. Die Anzahl der Überführungsbereiche 26 kann jedoch grundsätzlich bedarfsabhängig frei gewählt werden und ist nicht auf die vorstehenden Bespiele beschränkt.

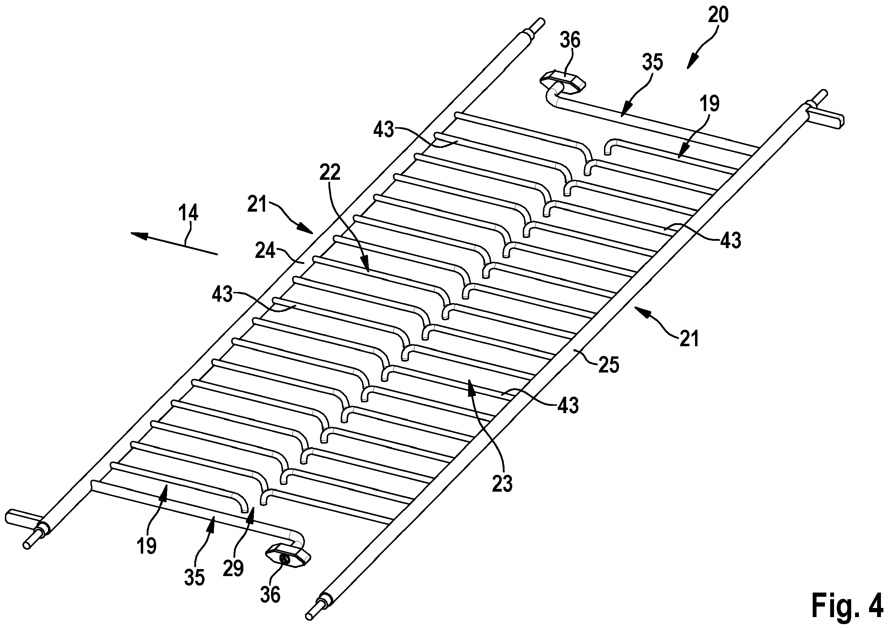

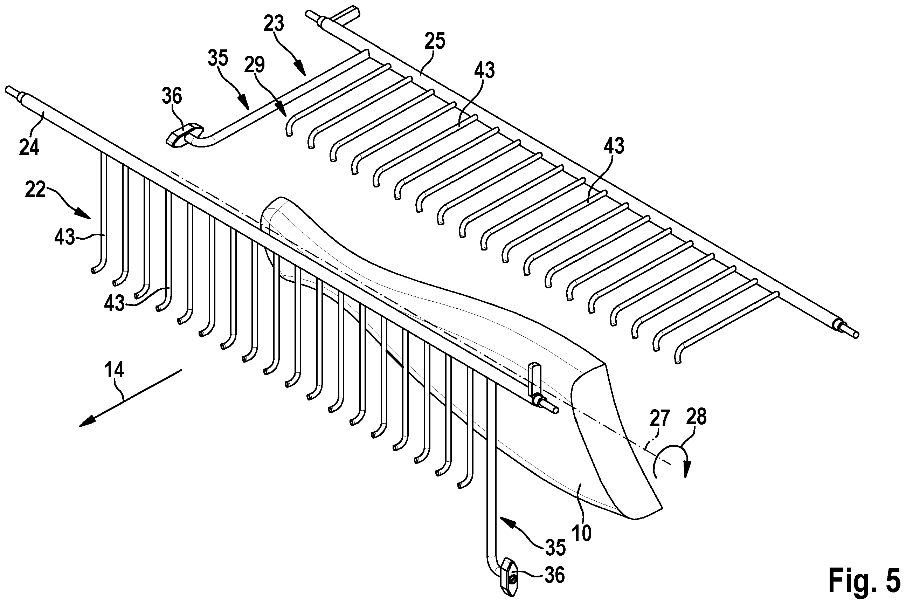

Figur 4 zeigt eine Teilansicht eines der Transportelementepaare 20 in der Förderstellung. Beide der Transportelemente 22, 23 bilden die Artikelauflageflächen 19, mittels derer der - in der Figur 4 nicht gezeigte - Artikel 10 gestützt wird. Wie in Figur 5 gezeigt, erfolgt durch wahlweises gesteuertes Verschwenken eines der Transportelemente 22 eine Überführung des Artikels 10 unter Änderung der Artikelausrichtung in die vorgegebene Endlage 11. Durch diese einseitige "Wegnahme" der Stützfunktion des einen Transportelements 22 erhält der Artikel 10 einen Drehimpuls in Drehrichtung 28 um die in Figur 5 angedeutete Artikellängsachse 27.

Die Fallhöhe zwischen der Förderebene 13 und der in den Figuren nicht explizit gezeigten, unterhalb dieser Förderebene 13 gelegenen Ebene ist stets so zu bemessen, dass während des freien Falls der Artikel 10 ausreichend Zeit verbleibt, um die Ausrichtung bzw. Orientierung des Artikels 10 beim Durchlauf der entsprechenden Fallstrecke zu ändern.

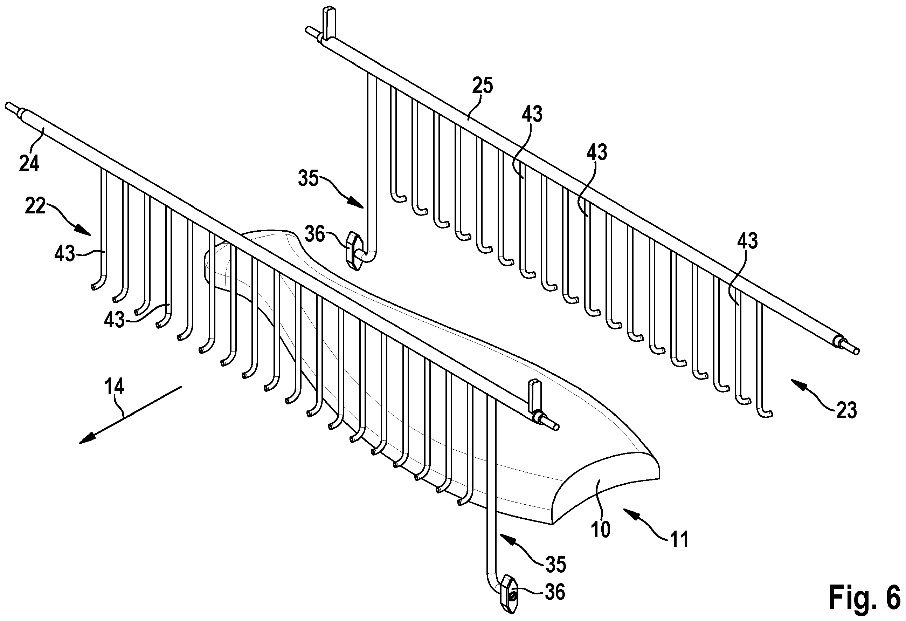

Durch wahlweises gesteuertes Verschwenken beider der Transportelemente 22, 23 jeweils eines der Transportelementepaare 20 mittels der Steuerrichtung bleibt die Artikelausrichtung erhalten. Der Artikel 10 wird, ohne Änderung seiner Ausrichtung bzw. Orientierung, in die vorgegebene Endlage 11 überführt, wie dies schematisch in der Figur 6 gezeigt ist. Das beidseitige "Wegklappen" der Transportelemente 22, 23 bewirkt, dass auf den Artikel 10 kein zusätzlicher Drehimpuls einwirkt und dieser in einer rein translatorischen Bewegung der Schwerkraft folgend in die vorgegebene Endlage 11 überführt wird.

Wie bereits eingangs beschrieben, erfolgt die Steuerung der exakten Endlageposition in der Förderrichtung 14 durch die Wahl eines geeigneten Überführungszeitpunktes mittels der Steuereinrichtung.

Wie in Figur 3 gezeigt, sind die Transportelemente 22, 23 der Transportelementepaare 20 jeweils in der Förderstellung zur Mitte 29 des jeweiligen Transportabschnitts 18 derart geneigt, dass die Artikelauflageflächen 19 jeweils eine Aufnahmemulde 30 für einen der Artikel 10 bilden.

Das Zuführen von zu überführenden Artikeln 10 mittels der erfindungsgemäßen Vorrichtung ist in Figur 1 aus Gründen der besseren Übersichtlichkeit nur durch die schematisch dargestellten Zuführmittel 31 angedeutet. Derartige Zuführmittel 31 sind aus dem Stand der Technik hinreichend bekannt, es können jegliche Arten von Endlosfördereinrichtungen 12 zum Einsatz kommen. Vorzugsweise sind die Zuführmittel 31, wie in der Figur 1 angedeutet, quer zur Förderrichtung 14 der Endlosfördereinrichtung 12 angeordnet.

In Figur 1 ist beispielhaft gezeigt, dass das Einfördern der Artikel 10 mittels der Zuführmittel 31 zwischen der Förderebene 13 und der darüberliegenden Rückführstrecke 17 der Endlosfördereinrichtung 12 erfolgt. Die vorliegende Erfindung ist jedoch nicht nur auf diese Zuführungsanordnung beschränkt. Vielmehr ist im Sinne der vorliegenden Erfindung grundsätzlich auch vorgesehen, die Rückführstrecke 17 unterhalb der Förderebene 13 anzuordnen.

In diesem - in der Zeichnung nicht gezeigten - Fall erfolgt die Zuförderung der Artikel 10 über oberhalb der Förderebene 13 angeordnete Zuführmittel 31, während sich die unterhalb der Förderebene 13 gelegene Ebene, in der die Artikel 10 nach dem Überführen die vorgegebene Endlage 11 erreichen, zwischen der Förderebene 13 einerseits und der darunter liegenden Rückführstrecke 17 andererseits befindet.

Vorzugsweise sind in der unterhalb der Förderebene 13 gelegenen Ebene Behälter 49, angeordnet, in die die Artikel 10 überführt werden. Die Behälter 49 sind über - in der Zeichnung nicht gezeigte - Transport- und Fördersysteme in der durch die Pfeile 48 angedeuteten Richtung bewegbar eingerichtet.

Die Endlosfördereinrichtung 12 umfasst vorzugsweise, wie in der Figur 1 gezeigt, zwei zueinander parallel angeordnete, sich in der Förderrichtung 14 erstreckende umlaufende Antriebsbänder 32. Wie aus Figur 2 ersichtlich, sind die Transportelemente 22, 23 zwischen diesen Antriebsbändern 32 schwenkbar angeordnet. Hierzu sind die Achsen 24, 25 der Transportelemente 22, 23, die jeweils in den Randbereichen 21 des jeweiligen Transportelementepaares 20 verlaufen, an den Antriebsbändern 32 unter Bildung eines Schwenklagers 33 angeordnet.

Gemäß den in der Zeichnung gezeigten bevorzugten Ausführungsformen der vorliegenden Erfindung werden die Schwenklager 33 beispielsweise durch auf den Antriebsbändern 32 in regelmäßigem Abstand angeformten vorspringenden Lagerformteilen gebildet, in denen die Achsen 24, 25 der Transportelemente 22, 23 schwenkbar gelagert angeordnet sind. Die Schwenklager 33 können alternativ auch anders ausgebildet sein, beispielsweise als Schwenklagerbuchsen, die mit den Antriebsbändern 32 kraft- und/oder stoffschlüssig verbunden sind.

Vorzugsweise weisen die Umlenkräder 16 Ausnehmungen 58 auf, die eingerichtet sind, die Schwenklager 33 beim Umlauf der Antriebsbänder 32 um die Umlenkräder 16 aufzunehmen, um so einen vollflächigen Kontakt zwischen dem jeweiligen Antriebsband 32 und dem jeweiligen Umlenkrad 16 zu bewirken.

Figur 3 ist zu entnehmen, dass die Endlosfördereinrichtung 12 jeweils zwei sich in der Förderrichtung 14 erstreckende, parallel unterhalb der Antriebsbänder 32 angeordnete Führungselemente 34 umfasst. Die Führungselemente 34 sind zur Gleitführung von an den Transportelementen 22, 23 angeordneten Umlenkelementen 35 eingerichtet. Weiter bevorzugt ist jeweils an dem freien Ende der Umlenkelemente 35 ein Gleitschuhelement 36 angeordnet. Die Führungselemente 34 stützen über das Umlenkelement 35 die Transportelemente 22, 23 entgegen der Schwerkraft, so dass diese in Förderstellung die zuvor beschriebenen Artikelauflageflächen 19 bilden.

Die Umlenkelemente 35 sind vorzugsweise jeweils an gegenüberliegenden Führungsseiten 37, 38 der Transportelemente 22, 23 jeweils eines der Transportelementepaare 20 angeordnet. Wie beispielsweise in Figur 2 gezeigt, ist das Umlenkelement 35 des Transportelements 22 mit Blickrichtung in die Förderrichtung 14 an der linksseitigen Führungsseite 37 angeordnet, während das Umlenkelement 35 des Transportelements 23 an der rechtsseitigen Führungsseite 38 angeordnet ist. Die Anordnung der Umlenkelemente 35 ist nicht auf die in Figur 2 gezeigte Zuordnung zu den Führungsseiten 37, 38 beschränkt. Vielmehr ist es möglich, die Zuordnung von linksseitiger Führungsseite 37 und rechtsseitiger Führungsseite 38 zu den jeweiligen Umlenkelementen 35 zu vertauschen.

Figur 3 zeigt, dass die Führungselemente 34 jeweils eine ortsfest angeordnete Führungsschiene 39 sowie in dem mindestens einen Überführungsbereich 26 mindestens ein Verstellelement 40 aufweisen. Das Verstellelement 40 ist steuerbeweglich ausgebildet, so dass dieses mittels der Steuereinrichtung verstellbar ist. So ist das Verstellelement 40 eingerichtet, die Umlenkelemente 35 in einer Führungsstellung gleitend zu führen und in einer Umlenkstellung die Führung der Umlenkelemente 35 freizugeben. Die sich daraus ergebenden Stellungen der Transportelemente 22, 23 sind schematisch in Figuren 4, 5 und 6 gezeigt.

Befindet sich das jeweilige Umlenkelement 35 in der Führungsstellung, so werden die Umlenkelemente 35 gleitend geführt, und die Transportelemente 22, 23 bilden die zuvor beschriebenen Artikelauflageflächen 19. Die Artikelauflageflächen 19 können, wie in der Figur 4 beispielhaft gezeigt, horizontal oder im Wesentlichen horizontal ausgerichtet sein, oder aber zu der Mitte 29 des jeweiligen Transportabschnitts 18 unter Bildung der zuvor beschriebenen Aufnahmemulde 30 geneigt ausgerichtet sein.

Befindet sich eines der Umlenkelemente 35 in der Umlenkstellung, beispielsweise wie in der Figur 5 gezeigt das Umlenkelement 35 des Transportelements 22, so führt die Freigabe der Führung des Umlenkelements 35 dazu, dass das Transportelement 22 um die Achse 24 der Schwerkraft folgend verschwenkt. Werden hingegen - wie in der Figur 6 gezeigt - sowohl das Umlenkelement 35 des Transportelements 22 als auch das Umlenkelement 35 des Transportelements 23 in die Umlenkstellung gesteuert, so verschwenken beide Transportelemente 22, 23 im Wesentlichen zeitgleich um die jeweiligen Achsen 24, 25.

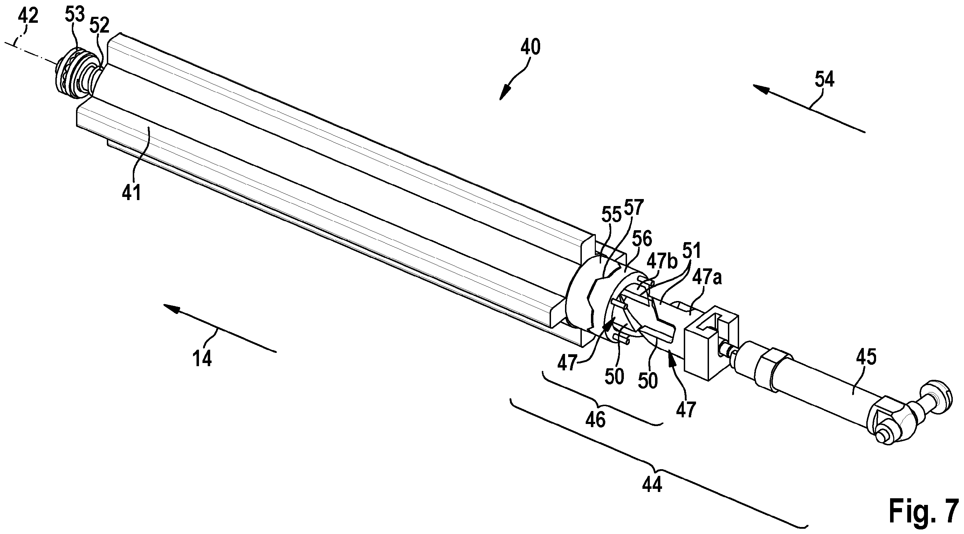

Wie der Figur 7 zu entnehmen ist, weist das Verstellelement 40 mindestens eine Führungsfläche 41 auf. Vorteilhafterweise umfasst das Verstellelement 40, wie in der Zeichnung gezeigt, insgesamt vier der Führungsflächen 41. Die Führungsflächen 41 sind um die in der Förderrichtung 14 verlaufende Drehachse 42 mittels der Steuereinrichtung steuerbar schwenkbar eingerichtet.

Vorzugsweise sind die Transportelemente 22, 23 gitterartig ausgebildet. Eine mögliche Ausbildung dieser gitterartigen Struktur der Transportelemente 22, 23 ist in den Figuren 4, 5 und 6 gezeigt. Die Auflageflächen 19 der Transportelemente 22, 23 werden durch eine Parallelanordnung einer Mehrzahl von Gitterstreben 43 gebildet.

Weitere bevorzugt sind die Gitterstreben 43 rechtwinklig an den Achsen 24, 25 angeordnet, die stabförmig ausgebildet sind. Die stabförmig ausgebildeten Achsen 24, 25 haben damit zugleich die Funktion einer Hauptstrebe, um so die Anordnung aus den Gitterstreben 43 zu halten. Vorzugsweise sind auch die Umlenkelemente 35 stabförmig ausgebildet.

Figur 7 zeigt eine Detailansicht des Verstellelements 40 mit einer Antriebseinheit 44. Zum Steuern der Verstellelemente 40 ist die Steuereinrichtung jeweils mit der Antriebseinheit 44 wirkverbunden. Die Antriebseinheit 44 umfasst einen steuerbaren Aktor 45, der zur Erzeugung einer Transversalbewegung eingerichtet ist. Das weiteren umfasst die Antriebseinheit 44 eine Umwandlungseinheit 46, die zum Umwandeln der Transversalbewegung in eine Rotationsbewegung eingerichtet und ausgebildet ist. Der Aktor 45 kann beispielsweise als Pneumatik- oder Hydraulikzylinder ausgebildet sein, oder als Zug-Schub-Elektromagnet.

Die Umwandlungseinheit 46 umfasst zwei Kurvensteuerteile 47, die zur Umsetzung der Transversalbewegung in die Rotationsbewegung mit entsprechenden Kurvenprofilen ausgestattet sind. Wie in der Zeichnung gezeigt, sind die Kurvensteuerteile 47 auf die Zahl der Führungsflächen 41 abgestimmt, so dass bei jeder Hin- und Herbewegung des Aktors 45 die Führungsflächen 41 jeweils schrittweise um 90 Grad um die Drehachse 42 verschwenkt werden.

Vorzugsweise umfasst die Umwandlungseinheit 46 zwei Kurvensteuerteile 47. Ein erstes Kurvensteuerteil 47a ist an dem Aktor 45 angeordnet und ein zweites Kurvensteuerteil 47b ist an dem Verstellelement 40 angeordnet. Die Kurvensteuerteile 47a, 47b weisen einander zugewandte korrespondierend ausgebildete Steuerkurvenpaare 50, 51 auf.

Vorteilhafterweise ist das Verstellelement 40 entgegen der Wirkrichtung 54 des Aktors 45 mittels eines Federelements 52 und einem Axiallager 53 federvorgespannt axial verschieblich gelagert. Das Verstellelement 40 kann also zwischen einer Ruhestellung und einer Ausrückstellung axial bewegt werden. In der Führungsstellung ist das Verstellelement 40 bezüglich seiner Axialposition in der Ruhestellung, während dieses in der Umlenkstellung bezüglich seiner Axialposition in der Ausrückstellung ist. In Figur 7 ist ausschließlich die Ruhestellung gezeigt. Wird das Verstellelement 40 in die Ausrückstellung überführt, so wird dieses in der Wirkrichtung 54 bzw. der Förderrichtung 14 bewegt und das Federelement 52 entsprechend zusammengedrückt.

Vorzugsweise ist an dem Verstellelement 40 eine erste Steuerkrone 55 angeordnet, die in der Ruhestellung unter formschlüssigem Eingriff in eine ortsfest angeordnete zweite Steuerkrone 56 zur Rotationsarretierung der ersten Steuerkrone 55 ausgebildet ist. Die Steuerkronen 55, 56 sind des Weiteren eingerichtet, in der - in der Zeichnung nicht gezeigten - Ausrückstellung einen formschlussfreien Zustand einzunehmen. Anders ausgedrückt trennen sich die Steuerkronen 55, 56 entlang der in Figur 7 gezeigten Konturlinie 57 vollständig in der Ausrückstellung, so dass die beiden Steuerkronen 55, 56 mechanisch vollständig freikommen und die in der Ruhestellung vorhandene Arretierwirkung vollständig aufgehoben ist.

Wie anhand der Konturlinie 57 erkennbar ist, weisen die Steuerkronen 55, 56 ein stufenförmiges Stirnprofil auf. Die Anzahl von abgesenkten und erhöhten Bereichen entspricht vorzugsweise jeweils der Anzahl der Führungsflächen 41 des Verstellelements 40. Wie in der Zeichnung gezeigt umfasst das Verstellelement 40 vorzugweise vier der Führungsflächen, sodass die Steuerkronen 55, 56 jeweils ein Stirnprofil mit jeweils vier abgesenkten und vier erhöhten Bereichen aufweist. Die Übergänge zwischen einem abgesenkten und einem erhöhten Bereich des Stirnprofils werden durch Schrägflächen gebildet. Die Schrägflächen bewirken zusammen mit der Federvorspannung durch das Federelement 52, dass die Steuerkronen 55, 56 weitestgehend selbsttätig in eine Arretierstellung gebracht werden. Die mittels des Aktors 45 eingeleitete Drehbewegung des Verstellelements 40 muss daher nicht einmal vollständig erfolgen. Es ist bereits ausreichend das Verstellelement 40 nur soweit zu drehen, dass die Steuerkronen 55, 56 selbsttätig die Drehung weiter fördern, bis sich diese wieder in der Ruhestellung befinden.

## Patentansprüche

1. Vorrichtung, eingerichtet zum Überführen von Artikeln (10) der fisch- und fleischverarbeitenden Industrie in eine vorgegebene Endlage (11), umfassend
eine umlaufende, zum Fördern der Artikel in einer Förderebene (13) ausgebildete Endlosfördereinrichtung (12) mit einer Mehrzahl zur Einzelaufnahme der Artikel (10) eingerichteter und in Förderrichtung (14) bewegbar ausgebildeter Transportabschnitte (18), wobei
jeder der Transportabschnitte (18) in Förderstellung ein zwei Artikelauflageflächen (19) bildendes Transportelementepaar (20) umfasst und jedes Transportelement (22, 23) des Transportelementepaares (20) jeweils um im Randbereich (21) des jeweiligen Transportabschnitts (18) verlaufende Achsen (24, 25) derart steuerbeweglich schwenkbar eingerichtet ist, dass
die Artikel (10) in mindestens einem Überführungsbereich (26) unter Schwerkrafteinwirkung in eine unterhalb der Förderebene (13) gelegene Ebene durch wahlweises gesteuertes Verschwenken beider Transportelemente (22, 23) jeweils eines der Transportelementepaare (20) mittels einer Steuereinrichtung unter Beibehaltung der Artikelausrichtung in die vorgegebene Endlage (11) überführt werden, oder durch gesteuertes Verschwenken jeweils eines der Transportelemente (22, 23) jeweils eines der Transportelementepaare (20) unter Änderung der Artikelausrichtung in die vorgegebene Endlage (11) überführt werden.

2. Vorrichtung nach Anspruch 1, **dadurch gekennzeichnet, dass** die Transportelemente (22, 23) der Transportelementepaare (20) jeweils in der Förderstellung zur Mitte (29) des jeweiligen Transportabschnitts (18) derart geneigt sind, dass die Artikelauflageflächen (19) jeweils eine Aufnahmemulde (30) für einen der Artikel (10) bilden.

3. Vorrichtung nach einem der Ansprüche 1 oder 2, **dadurch gekennzeichnet, dass** die Endlosfördereinrichtung (12) zwei zueinander parallel angeordnete, sich in der Förderrichtung (14) erstreckende umlaufende Antriebsbänder (32) umfasst, zwischen denen die Transportelemente (22, 23) um die in dem Randbereich (21) des jeweiligen Transportabschnitts (18) verlaufenden Achsen (24, 25) schwenkbar angeordnet sind.

4. Vorrichtung nach einem der Ansprüche 1 bis 3, **dadurch gekennzeichnet, dass** die Endlosfördereinrichtung (12) jeweils zwei sich in der Förderrichtung (14) erstreckende, parallel unterhalb der Antriebsbänder (32) angeordnete Führungselemente (34) umfasst, die zur Gleitführung von an den Transportelementen (22, 23) angeordneten Umlenkelementen (35) eingerichtet sind.

5. Vorrichtung nach Anspruch 4, **dadurch gekennzeichnet, dass** die Umlenkelemente (35) jeweils an den Transportelementen (22, 23) eines der Transportelementepaare (20) an gegenüberliegenden Führungsseiten (37, 38) der Transportelemente (22, 23) angeordnet sind.

6. Vorrichtung nach einem der Ansprüche 4 oder 5, **dadurch gekennzeichnet, dass** die Führungselemente (34) jeweils eine ortsfest angeordnete Führungsschiene (39) sowie in dem mindestens einen Überführungsbereich (26) mindestens ein mittels der Steuereinrichtung steuerbeweglich ausgebildetes Verstellelement (40) umfassen, das eingerichtet ist, die Umlenkelemente (35) in einer Führungsstellung gleitend zu führen und in einer Umlenkstellung die Führung der Umlenkelemente (35) freizugeben.

7. Vorrichtung nach Anspruch 6, **dadurch gekennzeichnet, dass** die Verstellelemente (40) mindestens eine Führungsfläche (41) aufweisen, die um eine in der Förderrichtung (14) verlaufende Drehachse (42) mittels der Steuereinrichtung steuerbar schwenkbar eingerichtet ist.

8. Vorrichtung nach Anspruch 7, **dadurch gekennzeichnet, dass** die Verstellelemente (40) im die Drehachse (42) enthaltenden Querschnitt kreuzartig ausgebildet sind.

9. Vorrichtung nach einem der Ansprüche 1 bis 8, **dadurch gekennzeichnet, dass** die Transportelemente (22, 23) gitterartig ausgebildet sind.

10. Vorrichtung nach einem der Ansprüche 3 bis 9, **dadurch gekennzeichnet, dass** die in den Randbereichen (21) des jeweiligen Transportabschnitts (18) verlaufenden Achsen jeweils eines der Transportelemente (22, 23) eines der Transportelementepaare (20) stabförmig ausgebildet sind und beidseitig an den Antriebsbändern (32) mittels Schwenklagerung angeordnet sind.

11. Vorrichtung nach Anspruch 4 bis 10, **dadurch gekennzeichnet, dass** die Umlenkelemente (35) stabförmig ausgebildet sind.

12. Vorrichtung nach einem der Ansprüche 6 bis 11, **dadurch gekennzeichnet, dass** die Steuereinrichtung zum Steuern der Verstellelemente (40) jeweils mit einer Antriebseinheit (44) wirkverbunden ist, wobei die Antriebseinheit (44) einen steuerbaren Aktor (45) zur Erzeugung einer Transversalbewegung und eine zur Umwandlung der Transversalbewegung in mindestens eine Rotationsbewegung eingerichtete Umwandlungseinheit (46) umfasst, die zum Schwenken der mindestens einen Führungsfläche (41) des Verstellelements (40) um die Drehachse (42) ausgebildet ist.

13. Vorrichtung nach Anspruch 12, **dadurch gekennzeichnet, dass** die Umwandlungseinheit (46) zwei Kurvensteuerteile (47) umfasst, wobei ein erstes Kurvensteuerteil (47a) an dem Aktor (45) angeordnet ist und ein zweites Kurvensteuerteil (47b) an dem Verstellelement (40) angeordnet ist, wobei die Kurvensteuerteile (47a, 47b) einander zugewandte korrespondierend ausgebildete Steuerkurvenpaare (50, 51) aufweisen.

14. Vorrichtung nach Anspruch 13, **dadurch gekennzeichnet, dass** ein erstes der Steuerkurvenpaare (50) eingerichtet ist, die Transversalbewegung des Aktors (45) in eine Rotationsbewegung des zweiten Kurvensteuerteils (47b) relativ zu dem ersten Kurvensteuerteil (47a) zu wandeln und ein zweites der Steuerkurvenpaare (51) eingerichtet ist, die Transversalbewegung des Aktors (45) auf das zweite Kurvensteuerteil (47b) in der Wirkrichtung (54) des Aktors (45) zu übertragen.

15. Vorrichtung nach einem der Ansprüche 12 bis 14, **dadurch kennzeichnet, dass** das Verstellelement (40) entgegen der Wirkrichtung (54) des Aktors (45) mittels einem Federelement (52) und einem Axiallager (53) federvorgespannt axial verschieblich gelagert ist, so dass das Verstellelement (40) in der Führungsstellung bezüglich seiner Axialposition in Ruhestellung ist, während das Verstellelement (40) in der Umlenkstellung bezüglich seiner Axialposition in einer Ausrückstellung ist.

16. Vorrichtung nach Anspruch 15, **dadurch gekennzeichnet, dass** an dem Verstellelement (40) eine erste Steuerkrone (55) angeordnet ist, die in der Ruhestellung unter formschlüssigem Eingriff in eine ortsfest angeordnete zweite Steuerkrone (56) zur Rotationsarretierung der ersten Steuerkrone (55) ausgebildet ist, und wobei die Steuerkronen (55, 56) weiter eingerichtet sind, in der Ausrückstellung einen formschlussfreien Zustand einzunehmen.

17. Verfahren zum Überführen von Artikeln der fisch- und fleischverarbeitenden Industrie in eine vorgegebene Endlage, umfassend die Schritte:
Fördern der Artikel (10) in einer Förderebene (13) mittels einer umlaufenden Endlosfördereinrichtung (12) mit einer Mehrzahl zur Einzelaufnahme der Artikel (10) eingerichteter Transportabschnitte (18) in eine Förderrichtung (14), wobei
jeder der Transportabschnitte (18) in Förderstellung ein zwei Artikelauflageflächen (19) bildendes Transportelementepaar (20) umfasst und jedes Transportelement (22, 23) des Transportelementepaares (20) jeweils um im Randbereich (21) des jeweiligen Transportabschnitts (18) verlaufende Achsen (24, 25) steuerbeweglich schwenkbar eingerichtet ist,
wahlweise gesteuertes Überführen der Artikel (10) unter Schwerkrafteinwirkung in mindestens einem Überführungsbereich (26) in eine unterhalb der Förderebene (13) gelegene Ebene durch wahlweises gesteuertes Verschwenken beider Transportelemente (22, 23) jeweils eines der Transportelementepaare (20) mittels einer Steuereinrichtung unter Beibehaltung der Artikelausrichtung in die vorgegebene Endlage (11),
oder durch gesteuertes Überführen der Artikel (10) durch wahlweises gesteuertes Verschwenken jeweils eines der Transportelemente (22, 23) jeweils eines der Transportelementepaare (20) unter Änderung der Artikelausrichtung in die vorgegebene Endlage (11).

18. Verfahren nach Anspruch 17, **gekennzeichnet durch** Zentrieren der Artikel (10) in der Förderstellung **durch** Schrägstellung der Transportelemente (22, 23) der Transportelementepaare (20) jeweils zur Mitte des jeweiligen Transportabschnitts (18) hin, so dass die Artikelauflageflächen (19) jeweils eine Aufnahmemulde (30) für einen der Artikel (10) bilden.

19. Verfahren nach einem der Ansprüche 17 oder 18, **gekennzeichnet durch** Antreiben der Transportelemente (22, 23) der Endlosfördereinrichtung (12) mittels zueinander parallel angeordneten, sich in der Förderrichtung (14) erstreckenden, umlaufenden Antriebsbändern (32), zwischen denen die Transportelemente (22,23) um die in dem Randbereich (21) des jeweiligen Transportabschnitts (18) verlaufenden Achsen (24, 25) schwenkbar sind.

20. Verfahren nach einem der Ansprüche 17 bis 19, **gekennzeichnet durch** Gleitführen von an den Transportelementen (22, 23) angeordneten Umlenkelementen (35) mittels jeweils zwei sich in der Förderrichtung (14) erstreckenden, parallel unterhalb der Antriebsbänder (32) angeordneten Führungselementen (34) der Endlosfördereinrichtung (12).

21. Verfahren nach Anspruch 20, **gekennzeichnet durch** jeweils einseitiges Führen der Umlenkelement (35) jeweils an gegenüberliegenden Führungsseiten (37, 38) der Transportelemente (22, 23) eines der Transportelementepaare (20).

22. Verfahren nach einem der Ansprüche 20 oder 21, **gekennzeichnet durch** Gleitführen der Umlenkelemente (35) in einer Führungsstellung mittels jeweils einer ortsfest angeordneten Führungsschiene (39) der Führungselemente (34) sowie Freigeben der Umlenkelemente (35) in einer Umlenkstellung in dem mindestens einen Überführungsbereich (26) mittels mindestens eines über die Steuereinrichtung steuerbaren Verstellelements (40).

23. Verfahren nach Anspruch 22, **gekennzeichnet durch** steuerbares Schwenken mindestens einer Führungsfläche (41) der Verstellelemente (40) um eine in der Förderrichtung (14) verlaufenden Drehachse (42) mittels der Steuereinrichtung.

24. Verfahren nach einem der Ansprüche 22 oder 23, **gekennzeichnet durch** Ansteuern einer Antriebseinheit (44) mittels der Steuereinrichtung zum Erzeugen einer Transversalbewegung mittels eines steuerbaren Aktors (45) und Umwandlung der Transversalbewegung in mindestens eine Rotationsbewegung mittels einer hierzu eingerichteten Umwandlungseinheit (46), um die mindestens eine Führungsfläche (41) des Verstellelements (40) um die Drehachse (42) zu verschwenken.

25. Verfahren nach Anspruch 24, **dadurch gekennzeichnet, dass** die mindestens eine Rotationsbewegung mittels zwei Kurvensteuerteilen (47) der Umwandlungseinheit (46) erzeugt wird, indem ein erstes Kurvensteuerteil (47a) an dem Aktor (45) angeordnet ist und ein zweites Kurvensteuerteil (47b) an dem Verstellelement (40) angeordnet ist, wobei die Kurvensteuerteile (47a, 47b) einander zugewandte korrespondierend ausgebildete Steuerkurvenpaare (50, 51) aufweisen.

26. Verfahren nach Anspruch 25, **gekennzeichnet durch** Wandeln der Transversalbewegung des Aktors (45) in eine Rotationsbewegung des zweiten Kurvensteuerteils (47b) relativ zu dem ersten Kurvensteuerteil (47a) mittels eines ersten Steuerkurvenpaares (50) und Übertragen der Transversalbewegung des Aktors (45) auf das zweite Kurvensteuerteil (47b) in der Wirkrichtung (54) des Aktors (45).

27. Verfahren nach einem der Ansprüche 25 bis 26, **dadurch gekennzeichnet, dass** das Verstellelement (40) in der Führungsstellung bezüglich seiner Axialposition in Ruhestellung ist, während das Verstellelement (40) in der Umlenkstellung bezüglich seiner Axialposition in einer Ausrückstellung ist, indem das Verstellelement (40) entgegen der Wirkrichtung (54) des Aktors (45) mittels einem Federelement (52) und einem Axiallager (53) federvorgespannt axial verschieblich gelagert ist.

28. Verfahren nach Anspruch 27, **gekennzeichnet durch** formschlüssigen Eingriff in eine ortsfest angeordnete zweite Steuerkrone (56) zur Rotationsarretierung der ersten Steuerkrone (55) in der Ruhestellung und Einnehmen der Steuerkronen (55, 56) eines formschlussfreien Zustandes in der Ausrückstellung.

## Claims

1. Apparatus configured for transferring articles (10) of the fish and meat processing industry to a predetermined end position (11), comprising
a circulating continuous conveying device (12) designed to convey the articles in a conveying plane (13) with a plurality of transport sections (18), which are configured for individually receiving the articles (10) and designed to be movable in the conveying direction (14), wherein
each of the transport sections (18) comprises in the conveying position a transport element pair (20) forming two article support surfaces (19) and each transport element (22, 23) of the transport element pair (20) is configured in each case to be controllably pivotable about axles (24, 25), running in the edge region (21) of the respective transport section (18), in such a manner that
the articles (10) are transferred into the predetermined end position (11) in at least one transfer region (26) under the effect of gravity in a plane lying below the conveying plane (13) by either controlled pivoting of both transport elements (22, 23) of one of the respective transport element pairs (20) using a control device while retaining the article orientation, or they are transferred into the predetermined end position (11) by controlled pivoting of one of the respective transport elements (22, 23) of one of the respective transport element pairs (20) while changing the article orientation.

2. Apparatus according to claim 1, **characterised in that** the transport elements (22, 23) of the transport element pairs (20) are each inclined towards the centre (29) of the respective transport section (18) in the conveying position in such a manner that the article support surfaces (19) each form a receiving trough (30) for one of the articles (10).

3. Apparatus according to one of claims 1 or 2, **characterised in that** the continuous conveying device (12) comprises two circulating drive belts (32) arranged parallel to each other and extending in the conveying direction (14), between which the transport elements (22, 23) are pivotably arranged about the axles (24, 25) running in the edge region (21) of the respective transport section (18).

4. Apparatus according to any one of claims 1 to 3, **characterised in that** the continuous conveying device (12) comprises two guide elements (34) each extending in the conveying direction (14) and arranged in parallel below the drive belts (32) which guide elements are configured for sliding guidance of deflecting elements (35) arranged on the transport elements (22, 23).

5. Apparatus according to claim 4, **characterised in that** the deflecting elements (35) are each arranged on the transport elements (22, 23) of one of the transport element pairs (20) on opposing guiding sides (37, 38) of the transport elements (22, 23).

6. Apparatus according to one of claims 4 or 5, **characterised in that** the guide elements (34) each comprise a stationary guide rail (39) and, in the at least one transfer region (26), at least one adjustment element (40) which is designed to be controllably movable by means of the control device and which is configured to guide the deflecting elements (35) slidingly in a guiding position and to enable guidance of the deflecting elements (35) in a deflecting position.

7. Apparatus according to claim 6, **characterised in that** the adjustment elements (40) have at least one guide surface (41) which is configured to be controllably pivotable by means of the control device about an axis of rotation (42) running in the conveying direction (14).

8. Apparatus according to claim 7, **characterised in that** the adjustment elements (40) are formed in the manner of a cross in the cross-section containing the axis of rotation (42).

9. Apparatus according to any one of claims 1 to 8, **characterised in that** the transport elements (22, 23) are formed in the manner of a grid.

10. Apparatus according to any one of claims 3 to 9, **characterised in that** the axles running in the edge regions (21) of the respective transport section (18) of one each of the transport elements (22, 23) of one of the transport element pairs (20) are rod-shaped and are arranged on both sides of the drive belts (32) by means of pivot bearings.

11. Apparatus according to any one of claims 4 to 10, **characterised in that** the deflecting elements (35) are rod-shaped.

12. Apparatus according to any one of claims 6 to 11, **characterised in that** for controlling the adjustment elements (40), the control device is operatively connected in each case to a drive unit (44), wherein the drive unit (44) comprises a controllable actuator (45) for producing a transverse movement and a conversion unit (46) configured to convert the transverse movement into at least one rotational movement, said conversion unit being configured to pivot the at least one guide surface (41) of the adjustment element (40) about the axis of rotation (42).

13. Apparatus according to claim 12, **characterised in that** the conversion unit (46) comprises two curve control parts (47), wherein a first curve control part (47a) is arranged on the actuator (45) and a second curve control part (47b) is arranged on the adjustment element (40), wherein the curve control parts (47a, 47b) have correspondingly formed cam pairs (50, 51) directed towards each other.

14. Apparatus according to claim 13, **characterised in that** a first of the cam pairs (50) is configured to convert the transverse movement of the actuator (45) into a rotational movement of the second curve control part (47b) relative to the first curve control part (47a) and a second of the cam pairs (51) is configured to transfer the transverse movement of the actuator (45) to the second curve control part (47b) in the operating direction (54) of the actuator (45).

15. Apparatus according to any one of claims 12 to 14, **characterised in that** the adjustment element (40) is spring-tensioned so as to be axially displaceable against the operating direction (54) of the actuator (45) by means of a spring element (52) and an axial bearing (53), such that in the guiding position the adjustment element (40) is in the idle position in respect of its axial position, while in the deflecting position the adjustment element (40) is in a released position in respect of its axial position.

16. Apparatus according to claim 15, **characterised in that** a first control crown (55) is arranged on the adjustment element (40), which first control crown is configured in the idle position with form-fitting engagement in a stationary second control crown (56) for locking the rotation of the first control crown (55), and wherein the control crowns (55, 56) are further configured to assume a non-form-fitting state in the released position.

17. Method for transferring articles of the fish and meat processing industry to a predetermined end position, comprising the steps:
Conveying of the articles (10) in a conveying plane (13) by means of a circulating continuous conveying device (12) with a plurality of transport sections (18) which are configured for individually receiving the articles (10) in a conveying direction (14), wherein
each of the transport sections (18) comprises in the conveying position a transport element pair (20) forming two article support surfaces (19) and each transport element (22, 23) of the transport element pair (20) is configured in each case to be controllably pivotable about axles (24, 25) running in the edge region (21) of the respective transport section (18),
optional controlled transfer of the articles (10) under the effect of gravity into the predetermined end position (11) in at least one transfer region (26) in a plane lying below the conveying plane (13) by either controlled pivoting of both transport elements (22, 23) of one of the respective transport element pairs (20) using a control device while retaining the article orientation,
or by controlled transfer of the articles (10) into the predetermined end position (11) by optional controlled pivoting of one of the respective transport elements (22, 23) of one of the respective transport element pairs (20) while changing the article orientation.

18. Method according to claim 17, **characterised by** centring the articles (10) in the conveying position by inclining the transport elements (22, 23) of the transport element pairs (20) towards the centre of the respective transport section (18) in each case such that the article support surfaces (19) each form a receiving trough (30) for one of the articles (10).

19. Methods according to claim 17 or 18, **characterised by** driving the transport elements (22, 23) of the continuous conveying device (12) by means of circulating drive belts (32) arranged parallel to each other and extending in the conveying direction (14), between which the transport elements (22, 23) are pivotable about the axles (24, 25) running in the edge region (21) of the respective transport section (18).

20. Method according to any one of claims 17 to 19, **characterised by** sliding guidance of deflecting elements (35) arranged on the transport elements (22, 23) by means of two guide elements (34) of the continuous conveying device (12), extending in each case in the conveying direction (14) and arranged in parallel below the drive belts (32).

21. Method according to claim 20, **characterised by** one-sided guidance in each case of the deflecting elements (35), in each case on opposing guiding sides (37, 38) of the transport elements (22, 23) of one of the transport element pairs (20).

22. Method according to claim 20 or 21, **characterised by** sliding guidance of the deflecting elements (35) in a guiding position by means of a stationary guide rail (39) of the guide elements (34) in each case and enabling of the deflecting elements (35) in a deflecting position in the at least one transfer region (26) by means of at least one adjustment element (40) which can be controlled via the control device.

23. Method according to claim 22, **characterised by** controllable pivoting of at least one guide surface (41) of the adjustment elements (40) about an axis of rotation (42) running in the conveying direction (14) by means of the control device.

24. Method according to claim 22 or 23, **characterised by** controlling a drive unit (44) by means of the control device to produce a transverse movement by means of a controllable actuator (45) and conversion of the transverse movement into at least one rotational movement by means of a conversion unit (46) configured therefor, in order to pivot the at least one guide surface (41) of the adjustment element (40) about the axis of rotation (42).

25. Method according to claim 24, **characterised in that** the at least one rotational movement is produced by means of two curve control parts (47) of the conversion unit (46), **in that** a first curve control part (47a) is arranged on the actuator (45) and a second curve control part (47b) is arranged on the adjustment element (40), wherein the curve control parts (47a, 47b) have correspondingly formed cam pairs (50, 51) directed towards each other.

26. Method according to claim 25, **characterised by** converting the transverse movement of the actuator (45) into a rotational movement of the second curve control part (47b) relative to the first curve control part (47a) by means of a first cam pair (50) and transferring the transverse movement of the actuator (45) to the second curve control part (47b) in the operating direction (54) of the actuator (45).

27. Method according to claim 25 or 26, **characterised in that** in the guiding position the adjustment element (40) is in idle position in respect of its axial position, while in the deflecting position the adjustment element (40) is in a release position in respect of its axial position, **in that** the adjustment element (40) is spring-tensioned so as to be axially displaceable against the operating direction (54) of the actuator (45) by means of a spring element (52) and an axial bearing (53).

28. Method according to claim 27, **characterised by** positive locking engagement in a stationary second control crown (56) for locking the rotation of the first control crown (55) in the idle position and for setting the control crowns (55, 56) of a non-positive locking state in the released position.

## Revendications

1. Appareil configuré pour transférer des articles (10) de l'industrie de transformation du poisson et de la viande dans une position finale prédéterminée (11), comprenant
un dispositif de convoyage sans fin (12) circulaire, conçu pour convoyer les articles dans un plan de convoyage (13) avec une pluralité de sections de transport (18) configurées pour recevoir les articles (10) de manière individuelle et conçues de manière mobile dans la direction de convoyage (14), dans lequel
chacune des sections de transport (18) comprend, dans la position de convoyage, une paire d'éléments de transport (20) formant deux surfaces de support d'articles (19) et chaque élément de transport (22, 23) de la paire d'éléments de transport (20) est configuré dans chaque cas de manière pivotante par commande autour d'axes (24, 25) courant dans la région de bordure (21) de la section de transport (18) respective, de telle façon que
les articles (10) sont soit transférés dans la position finale (11) prédéterminée dans au moins une région de transfert (26) sous l'effet de gravité dans un plan situé en dessous du plan de convoyage (13) via un pivotement commandé des deux éléments de transport (22, 23) constitués d'une des paires d'éléments de transport (20) au moyen d'un dispositif de commande en gardant l'orientation des articles, soit ils sont transférés dans la position finale (11) prédéterminée via un pivotement commandé d'un des éléments de transport (22, 23) respectif constitué d'une paire des paires d'éléments de transport (20) respective en changeant l'orientation des articles.

2. Appareil selon la revendication 1, **caractérisé en ce que** les éléments de transport (22, 23) des paires d'éléments de transport (20) sont chacun inclinés vers le centre (29) de la section de transport respective (18) dans la direction de convoyage de telle façon que les surfaces de support d'articles (19) forment chacune un creux de réception (30) pour un des articles (10).

3. Appareil selon la revendication 1 ou 2, **caractérisé en ce que** le dispositif de convoyage sans fin (12) comprend deux courroies d'entraînement circulaires (32) agencées parallèlement l'une à l'autre et s'étendant dans la direction de convoyage (14), entre lesquelles les éléments de transport (22, 23) sont agencés de manière pivotante autour des axes (24, 25) courant dans la région de bordure (21) de la section de transport (18) respective.

4. Appareil selon l'une quelconque des revendications 1 à 3, **caractérisé en ce que** le dispositif de convoyage sans fin (12) comprend deux éléments de guidage (34) s'étendant chacun dans la direction de convoyage (14) et agencés en parallèle en dessous des courroies d'entraînement (32), lesquels éléments de guidage sont configurés pour guider par glissement des éléments de renvoi (35) agencés au niveau des éléments de transport (22, 23).

5. Appareil selon la revendication 4, **caractérisé en ce que** les éléments de renvoi (35) sont chacun agencés au niveau des éléments de transport (22, 23) de l'une des paires d'éléments de transport (20) sur des côtés de guidage opposés (37, 38) des éléments de transport (22, 23).

6. Appareil selon l'une quelconque des revendications 4 ou 5, **caractérisé en ce que** les éléments de guidage (34) comprennent chacun un rail de guidage stationnaire (39) ainsi que, dans ladite au moins une région de transfert (26), au moins un élément d'ajustement (40) qui est conçu pour être déplaçable par commande au moyen du dispositif de commande et qui est configuré pour guider par glissement les éléments de renvoi (35) dans une position de guidage et pour permettre le guidage des éléments de renvoi (35) dans une position de renvoi.

7. Appareil selon la revendication 6, **caractérisé en ce que** les éléments d'ajustement (40) présentent au moins une surface de guidage (41) qui est configurée de manière pivotante par commande au moyen du dispositif de commande autour d'un axe de rotation (42) courant dans la direction de convoyage (14).

8. Appareil selon la revendication 7, **caractérisé en ce que** les éléments d'ajustement (40) sont conçus en forme de croix dans la section transversale contenant l'axe de rotation (42).

9. Appareil selon l'une quelconque des revendications 1 à 8, **caractérisé en ce que** les éléments de transport (22, 23) sont conçus en forme de grille.

10. Appareil selon l'une quelconque des revendications 3 à 9, **caractérisé en ce que** les axes courant dans les régions de bordure (21) de la section de transport (18) respective de chacun des éléments de transport (22, 23) d'une des paires d'éléments de transport (20) sont en forme de tige et sont agencés des deux côtés au niveau des courroies d'entraînement (32) au moyen de paliers pivotants.

11. Appareil selon l'une quelconque des revendications 4 à 10, **caractérisé en ce que** les éléments de renvoi (35) sont conçus en forme de tige.

12. Appareil selon l'une quelconque des revendications 6 à 11, **caractérisé en ce que**, pour commander les éléments d'ajustement (40), le dispositif de commande est connecté de manière fonctionnelle dans chaque cas à une unité d'entraînement (44), dans lequel l'unité d'entraînement (44) comprend un actionneur commandable (45) destiné à produire un mouvement transversal et une unité de conversion (46) configurée pour convertir le mouvement transversal en au moins un mouvement de rotation, ladite unité de conversion étant configurée pour faire pivoter ladite au moins une surface de guidage (41) de l'élément d'ajustement (40) autour de l'axe de rotation (42).

13. Appareil selon la revendication 12, **caractérisé en ce que** l'unité de conversion (46) comprend deux parties de commande incurvées (47), dans lequel une première partie de commande incurvée (47a) est agencée au niveau de l'actionneur (45) et une seconde partie de commande incurvée (47b) est agencée au niveau de l'élément d'ajustement (40), dans lequel les parties de commande incurvées (47a, 47b) présentent des paires de cames de commande formées en correspondance (50, 51) directement tournées l'une vers l'autre.

14. Appareil selon la revendication 13, **caractérisé en ce qu'**une première des paires de cames de commande (50) est configurée pour convertir le mouvement transversal de l'actionneur (45) en un mouvement de rotation de la seconde partie de commande incurvée (47b) relativement à la première partie de commande incurvée (47a) et une seconde des paires de cames de commande (51) est configurée pour transférer le mouvement transversal de l'actionneur (45) à la seconde partie de commande incurvée (47b) dans la direction de fonctionnement (54) de l'actionneur (45).

15. Appareil selon l'une quelconque des revendications 12 à 14, **caractérisé en ce que** l'élément d'ajustement (40) est soumis à une tension par ressort de manière à être axialement déplaçable dans la direction opposée à la direction de fonctionnement (54) de l'actionneur (45) au moyen d'un élément ressort (52) et d'un palier axial (53), de sorte que l'élément d'ajustement (40), dans la position de guidage, est dans la position de repos par rapport à sa position axiale, tandis que l'élément d'ajustement (40), dans la position de renvoi, est dans une position de désengagement par rapport à sa position axiale.

16. Appareil selon la revendication 15, **caractérisé en ce qu'**une première couronne de commande (55) est agencée au niveau de l'élément d'ajustement (40), laquelle première couronne de commande, dans la position de repos, par engagement de coopération de forme dans une seconde couronne de commande stationnaire (56), est conçue pour bloquer la rotation de la première couronne de commande (55), et dans lequel les couronnes de commande (55, 56) sont en outre configurées pour prendre un état de non-coopération de forme dans la position de désengagement.

17. Procédé pour transférer des articles de l'industrie de transformation du poisson et de la viande dans une position finale prédéterminée, comprenant les étapes consistant à :
convoyer les articles (10) dans un plan de convoyage (13) au moyen d'un dispositif de convoyage sans fin circulaire (12) avec une pluralité de sections de transport (18) configurées pour recevoir les articles (10) de manière individuelle dans une direction de convoyage (14), dans lequel
chacune des sections de transport (18) comprend, dans la position de convoyage, une paire d'éléments de transport (20) formant deux surfaces de support d'articles (19) et chaque élément de transport (22, 23) de la paire d'éléments de transport (20) est configuré dans chaque cas de manière pivotante par commande autour d'axes (24, 25) courant dans la région de bordure (21) de la section de transport (18) respective,
soit transférer de manière commandée les articles (10) sous l'effet de la gravité dans la position finale prédéterminée (11) dans au moins une région de transfert (26) dans un plan situé en dessous du plan de convoyage (13) via un pivotement commandé des deux éléments de transport (22, 23) constitués d'une des paires d'éléments de transport (20) respective au moyen d'un dispositif de commande en gardant l'orientation des articles,
soit transférer de manière commandée les articles (10) dans la position finale prédéterminée (11) via un pivotement commandé au choix d'un des éléments de transport (22, 23) respectif constitué d'une paire des paires d'éléments de transport (20) respective en changeant l'orientation des articles.

18. Procédé selon la revendication 17, **caractérisé par** l'étape consistant à centrer les articles (10) dans la position de convoyage en inclinant les éléments de transport (22, 23) des paires d'éléments de transport (20) vers le centre de la section de transport respective (18) dans chaque cas de sorte que les surfaces de support d'articles (19) forment chacune un creux de réception (30) pour un des articles (10).

19. Procédé selon l'une quelconque des revendications 17 ou 18, **caractérisé par** l'étape consistant à entraîner les éléments de transport (22, 23) du dispositif de convoyage sans fin (12) au moyen de courroies d'entraînement circulaires (32) agencées parallèlement l'une à l'autre et s'étendant dans la direction de convoyage (14), entre lesquelles les éléments de transport (22, 23) sont agencés de manière pivotante autour des axes (24, 25) courant dans la région de bordure (21) de la section de transport (18) respective.

20. Procédé selon l'une quelconque des revendications 17 à 19, **caractérisé par** l'étape consistant à guider par glissement des éléments de renvoi (35) agencés au niveau des éléments de transport (22, 23) au moyen de deux éléments de guidage (34) du dispositif de convoyage sans fin (12), s'étendant chacun dans la direction de convoyage (14) et agencés en parallèle en dessous des courroies d'entraînement (32).

21. Procédé selon la revendication 20, **caractérisé par** l'étape consistant dans chaque cas à guider d'un côté l'élément de renvoi (35), dans chaque cas au niveau de côtés de glissement opposés (37, 38) des éléments de transport (22, 23) d'une des paires d'éléments de transport (20).

22. Procédé selon l'une quelconque des revendications 20 ou 21, **caractérisé par** l'étape consistant à guider par glissement les éléments de renvoi (35) dans une position de guidage au moyen d'un rail de guidage stationnaire (39) des éléments de guidage (34) dans chaque cas et à permettre aux éléments de renvoi (35) dans une position de renvoi dans ladite au moins une région de transfert (26) au moyen d'au moins un élément d'ajustement (40) qui peut être commandé par le dispositif de commande.

23. Procédé selon la revendication 22, **caractérisé par** l'étape consistant à faire pivoter par commande au moins une surface de guidage (41) des éléments d'ajustement (40) autour d'un axe de rotation (42) courant dans la direction de convoyage (14) au moyen du dispositif de commande.

24. Procédé selon l'une quelconque des revendications 22 ou 23, **caractérisé par** l'étape consistant à piloter une unité d'entraînement (44) au moyen du dispositif de commande pour produire un mouvement transversal au moyen d'un actionneur commandable (45) et une conversion du mouvement transversal en au moins un mouvement de rotation au moyen d'une unité de conversion (46) configurée à cet effet, pour faire pivoter ladite au moins une surface de guidage (41) de l'élément d'ajustement (40) autour de l'axe de rotation (42).

25. Procédé selon la revendication 24, **caractérisé en ce que** ledit au moins un mouvement de rotation est produit au moyen de deux parties de commande incurvées (47) de l'unité de conversion (46), **en ce qu'**une première partie de commande incurvée (47a) est agencée au niveau de l'actionneur (45) et une seconde partie de commande incurvée (47b) est agencée au niveau de l'élément d'ajustement (40), dans lequel les parties de commande incurvées (47a, 47b) présentent des paires de cames de commande (50, 51) formées en correspondance directement tournées l'une vers l'autre.

26. Procédé selon la revendication 25, **caractérisé par** l'étape consistant à convertir le mouvement transversal de l'actionneur (45) en un mouvement de rotation de la seconde partie de commande incurvée (47b) relativement à la première partie de commande incurvée (47a) au moyen d'une première paire de cames de commande (50), et à transférer le mouvement transversal de l'actionneur (45) à la seconde partie de commande incurvée (47b) dans la direction de fonctionnement (54) de l'actionneur (45).

27. Procédé selon l'une quelconque des revendications 25 à 26, **caractérisé en ce que**, dans la position de guidage, l'élément d'ajustement (40) est dans une position de repos par rapport à sa position axiale, tandis que, dans la position de renvoi, l'élément d'ajustement (40) est dans une position de désengagement par rapport à sa position axiale, et **en ce que** l'élément d'ajustement (40) est soumis à une tension par ressort de manière à être axialement déplaçable dans la direction opposée à la direction de fonctionnement (54) de l'actionneur (45) au moyen d'un élément ressort (52) et d'un palier axial (53).

28. Procédé selon la revendication 27, **caractérisé par** l'étape consistant, dans la position de repos, à engager la première couronne de commande (55) par coopération de forme dans une seconde couronne de commande stationnaire (56) destinée à bloquer la rotation, et à mettre les couronnes de commande (55, 56) dans un état de non-coopération de forme dans la position de désengagement.
